# EUROPEAN PATENT APPLICATION

(11) **EP 0 648 620 A1**
(43) Date of publication of application: **19.04.1995**
(21) Application number: 94201909.2
(22) Date of filing: 02.07.1994
(51) Int. Cl.: B60B 21/00, B60C 15/02, B60B 21/06

(54) **A bicycle wheel particularly for mounting standard on-road tires on bicycles for off-road use, and method for the manufacture thereof**

(30) Priority: 18.10.1993 IT PD930206
(71) Applicant: ALPINA RAGGI S.p.A., I-20043 Arcore (MI) (IT)
(72) Inventor: Cappellotto, Guido, I-20043 Arcore (IT)
(74) Representative: Cantaluppi, Stefano

(57) **Abstract**

A spoke wheel is described which includes a rim (4) having respective free edges (6a,b) defined on its radially outermost end, a tire (20) mounting adapter (24) having a split ring configuration and having a tire mounting channel (26) and means (28a,b) of gripping the rim free edges (6a,b); the adapter (24) is attached to the rim with the grip means engaged over the rim free edges and held thereto by the tire (20) mounted in said channel (26).

## Description

This invention relates to a bicycle wheel particularly, but not exclusively, intended for enabling off-road bicycles to mount standard road tires, and a method for the manufacture thereof.

Great popularity are enjoying at present bicycles which are typically designed for off-road use and commonly referred to as "mountain bikes". Such bicycles are characterized by a robust frame and wheels for mounting wide-base tires with grip treads. Such wheels often have, for a given rolling circumference, rims of reduced diameter compared to similar wheels for standard on-road bicycles. This is due, at least in part, to the increased height of the grip tire over the standard road tire. Despite their specific destination, mountain bikes are frequently used on roads as well. In that case, it is desirable that the user be enabled to replace the grip tire-mounting wheels with wheels equipped with standard tires for road circulation.

This exchange is a relatively troublesome one to carry out, as well as one likely to adversely affect the brake performance. It is well known, in fact, that mountain bikes are usually equipped with shoe brakes which act on opposed wheel rim surfaces effective to provide frictional contact tracks for the respective brake shoes.

This invention is directed to provide a bicycle wheel useful with bicycles intended for different purposes, as well as being easy to exchange on normally off-road bicycles in order to convert the latter for normal road circulation.

This problem is solved by a bicycle wheel, particularly for converting bicycles originally designed for off-road uses to the use of standard on-road tires, which wheel comprises a wheel rim joined to a wheel hub, said wheel rim being channel-shaped with the convex facing toward the wheel hub and having a radially outermost end formed with respective free edges, characterized in that it comprises an annular shaped adapter for mounting a tire and having a tire mounting channel and means of gripping the free edges of said rim, said adapter being assembled to said rim with said grip means engaged over said free edges and held thereto by the tire mounted in said channel.

This wheel is manufactured by a method which comprises the following step:
providing a wheel rim joined to a wheel hub for rotation therewith, said wheel rim being channel-shaped with the convex facing toward the wheel hub and having a radially outermost end formed with respective free edges,
characterized in that it further comprises the following steps:
providing an adapter for mounting a tire thereon, said adapter having an annular configuration with a tire mounting channel and including means of gripping the free edges of said rim;
assembling said adapter to said rim with said grip means engaged over said free edges; and
mounting said tire in the channel of said adapter, the adapter being held to said rim by said tire.

It is found that this wheel is particularly adapted for implementation in the spoke wheel form.

Spoke wheels have not met with widespread acceptance by the cycling circles. They are mainly designed for racing applications and constructed of carbon fiber. However, their high cost makes them prohibitive for standard uses. In addition, it is at least questionable if the carbon parts of such wheels would provide suitable friction surfaces for the brake shoes. On the other hand, the construction of the wheel according to this invention allows it to be suitably die-cast from a light alloy.

The invention features and advantages will be apparent from the following detailed description of a preferred embodiment thereof, shown by way of example and not of limitation in the accompanying drawings, where:
Figure 1 is a side elevation view of a spoke wheel embodying this invention;
Figures 2 and 3 are sectional views taken along line II-II in Figure 1 showing the same wheel respectively fitted to the frame of a mountain bike and a standard bike for on-road use;
Figures 4 and 5 are respectively an exploded and an assembled sectional view showing an enlarged scale detail of the wheel in the preceding drawing figures;
Figure 6 is an enlarged sectional view of the detail marked with an arrow VI in Figure 5; and
Figures 7 and 8 are sectional views, corresponding to Figures 4 and 5, of the same wheel but differently fitted.

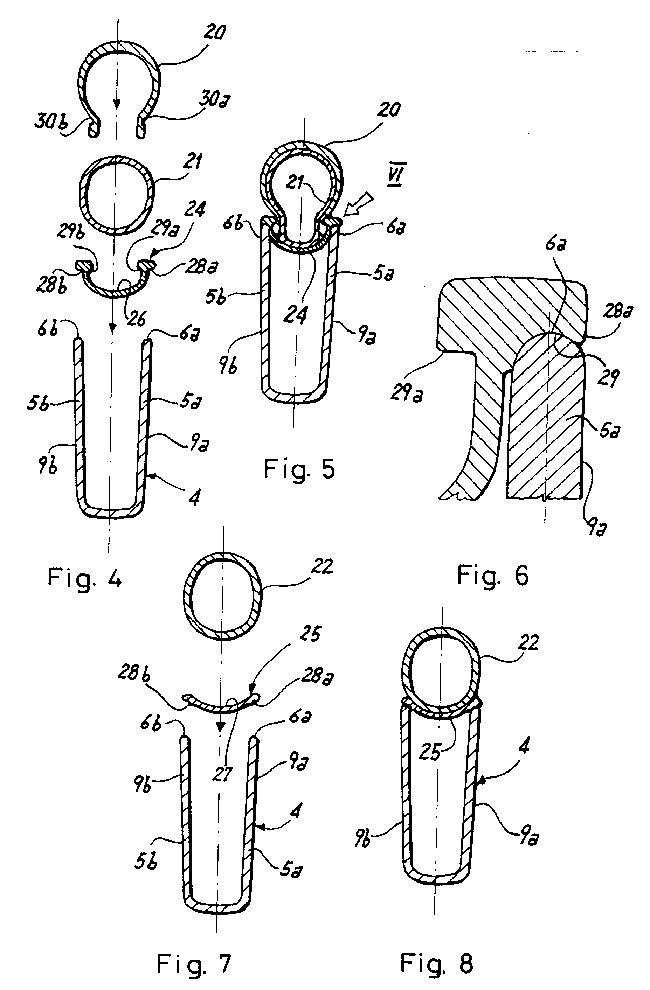

In the drawing figures, generally shown at 1 is a spoke wheel for bicycles which includes a wheel hub 2 connected to a wheel rim 4 by spokes 3. The rim 4 has a U-shaped channel-like configuration, as shown best in Figures 4 to 8, wherein two legs 5a,b of the U-shape have their radially outermost ends formed with rounded free edges 6a,b.

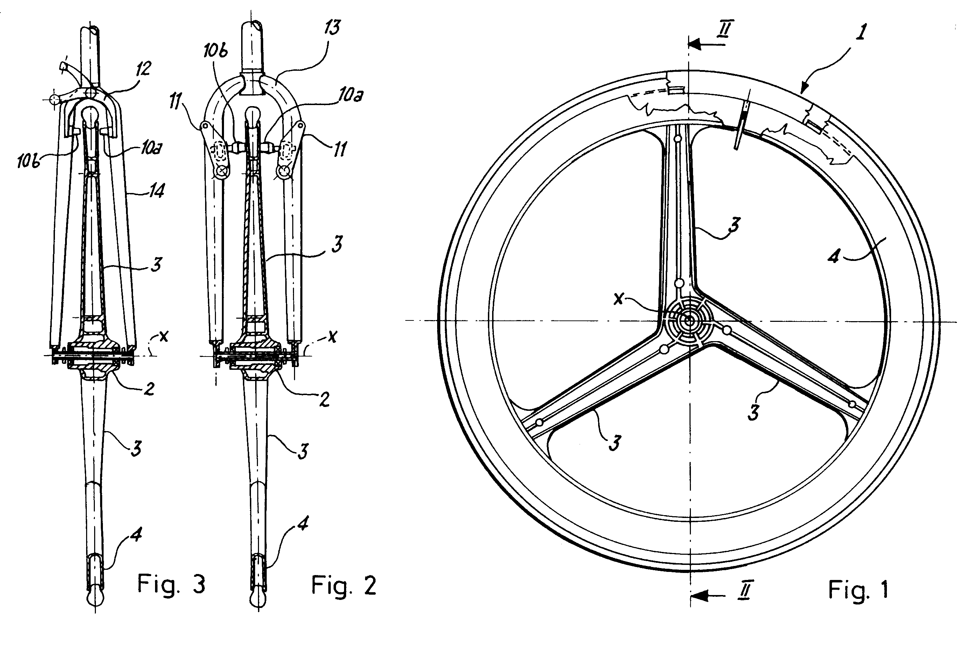

The hub 2, spokes 3 and rim 4 are die-castings of an aluminum alloy or another light alloy. The outward walls 9a,b of the rim legs 5a,b of the rim 4 define respective friction surfaces for brake shoes 10a,b of the bicycle. In the examples shown in Figures 2 and 3, these brake shoes are mounted on respective linkages 11 (Figure 2) and 12 (Figure 3) of conventional design, journalled on a mountain bike fork 13 and a standard bike fork 14, respectively. Notice that, because of the relatively broad radial spread of the walls 9a,b and the consequent capability of the latter to provide friction surfaces in a range of different diameters, the wheel 1 can readily fit forks 13, 14 having their brake shoes 10a,b located at different distances front the wheel axis X. Likewise, a wheel 1 of larger diameter, adapted for road circulation, can fit the fork 13 even if the latter has been designed to accept smaller diameter wheels for off-road use; what happens is simply that the brake shoes 10a,b will work on tracks set radially closer to the axis X while still lying on the surfaces 9a,b.

The wheel 1 can accept both tires 20 with a tube 21 (Figures 4 and 5) and tubeless 22 (Figure 7 and 8) also known in the industry as "palmer" tires. In either cases, the tires 20-22 would be mounted on the rim 4 using an adapter as respectively shown at 24 for the example in Figures 4 and 5 and at 25 for the example in Figures 7 and 8.

Both adapters 24 and 25 have a split annular ring configuration, that is to say, they are both bent into a split ring, so that they can be expanded to fit or remove them onto/from the rim 4. Both adapters 24, 25 are bent from light alloy sectional stock and formed with a channel 26,27 for receiving a respective tire therein and having respective grip formations 28a,b for gripping on the corresponding rim edges 6a,b of the rim 4. An example of such formations 28a,b is shown schematically in Figure 6, where it is seen that they have a rounded seat 29 whose concave embraces the convex of the corresponding edge 6a,b through such an angle that, on pushing the adapter 24, 25 against the rim 4, combined radial and axial holding actions are exerted which secure the adapter on the rim. It follows that the adapter 24, 25, additionally to providing a mounting channel 26,27 for the tire, also constitutes a strengthening and stiffening member for the rim 4 in the region of its free edges 6a,b.

Notice that the adapter 24 has, located at the formations 28a,b and on the opposite side therefrom, respective tooth-like projections 29a,b for holding the tire 20 to the tire mounting channel. In the mounted state of the tire, such projections are wedged into corresponding grooves 30a,b on the tire 20.

Notice, finally, that owing to the split ring construction of the adapter 24, 25, they are held to their corresponding rim 4 by the tire fitted thereon. In particular, the holding action is provided by the tire inflation pressure establishing a firm engagement of the grip formations 28a,b over the corresponding rim edges 6a,b.

The wheel 1 is manufactured as follows. First, the rim 4, complete with the spokes 3 and hub 2, is die-cast from a light alloy. Light alloy sectional stock is provided separately to have a shape matching the desired cross-section for the adapter 24 or 25. The sectional stock is then cut to the required length for the adapter 24 or 25 and bent into a ring by a bending process. Thereafter, the adapter is assembled to the rim 4 with the grip formations 28a,b engaged over the rim free edges 6a,b. The operation is completed by mounting the tire in the tire mounting channel of the adapter 24, 25 and inflating it as usual.

Among the advantages afforded by this invention is the possibility to make spoke wheels for bicycles which are remarkably lightweight and can be manufactured at costs much lower than carbon fiber wheels and more in keeping with those of traditional wire spoke wheels. Further, this wheel has friction surfaces whose radial spread allows of adaptation to brakes which have been arranged for wheels with smaller diameter rims. Likewise, this wheel can be easily assembled without any special equipment or machining tire mounting channels embedded in the wheel own structure. Lastly, this wheel can be readily adapted to accept both tube- and palmer-type tires.

## Claims

1. A method for manufacturing a bicycle wheel, particularly for mounting standard on-road tires on bicycles originally intended for off-road use, comprising the following step:
providing a wheel rim (4) joined to a wheel hub (2) for rotation therewith, said wheel rim being channel-shaped with the convex facing toward the wheel hub and having a radially outermost end formed with respective free edges (6a,b),
characterized in that it further comprises the following steps:
providing an adapter (24,25) for mounting a tire (20,22) thereon, said adapter having an annular configuration with a tire mounting channel (26,27) and including means (28a,b) of gripping the free edges (6a,b) of said rim;
assembling said adapter (24,26) to said rim with said grip means (28a,b) engaged over said free edges (6a,b); and
mounting said tire (20,22) in the channel (26,27) of said adapter, the adapter being held to said rim by said tire.

2. A method according to claim 1, wherein said rim (4) and said hub (2) are joined to each other by spokes (3), said rim, said hub and said spokes being aluminum alloy die-castings.

3. A method according to claim 2, wherein said tire mounting adapter (24,25) has a split ring configuration and is obtained by bending sectional stock formed with said channel (26,27) and said grip means (28a,b).

4. A method according to one or more of the preceding claims, wherein said adapter (24,25) is releasably attached to the wheel rim (4).

5. A method according to one or more of the preceding claims, wherein said adapter (24,25) is held with said grip means (28a,b) engaged over the corresponding edges (6a,b) of the wheel rim (4) by the inflation pressure of said tire (20,22).

6. A method according to one or more of the preceding claims, wherein said grip means (28a,b) are arranged to provide a combined radial and axial holding action of said adapter (24,25) to the wheel rim (4).

7. A bicycle wheel, particularly for mounting standard on-road tires on bicycles originally intended for off-road use, comprising a wheel rim (4) joined to a wheel hub (2), said rim (4) being channel-shaped with the convex facing toward the wheel hub (2) and having a radially outermost end formed with respective free edges (6a,b), characterized in that it comprises an annular shaped adapter (24,25) for mounting a tire (20,22) and having a tire mounting channel (26,27) and means (28a,b) of gripping the free edges (6a,b) of said rim (4), said adapter (24,25) being assembled to said rim (4) with said grip means (28a,b) engaged over said free edges (6a,b) and held thereto by the tire mounted in said channel (26,27).

8. A wheel according to claim 7, wherein said rim (4) is joined to the hub (2) by a plurality of spokes (3), said spokes, said rim and said hub being aluminum alloy die-castings.

9. A wheel according to claim 8, wherein said rim has at least one frictional engagement surface (9a,b) for a brake shoe (10a,b) defined thereon.

10. A wheel according to one or more of Claims 7 to 9, wherein said tire mounting adapter (24,25) has a split ring configuration.

11. A wheel according to one or more of Claims 7 to 10, wherein said adapter (24,25) is releasably attached to the wheel rim (4).

12. A wheel according to one or more of Claims 7 to 11, wherein said adapter (24,25) is held with said grip means (28a,b) engaged over the corresponding edges (6a,b) of the wheel rim by the inflation pressure of said tire.

13. A wheel according to one or more of Claims 7 to 12, wherein said grip means (28a,b) are arranged to exert a combined radial and axial holding action of said adapter to the wheel rim (4).
